# EUROPEAN PATENT APPLICATION

(11) **EP 0 895 935 A1**
(43) Date of publication of application: **10.02.1999**
(21) Application number: 98113946.2
(22) Date of filing: 24.07.1998
(51) Int. Cl.: B65B 57/02, B65H 39/16

(54) **Device for sensing a colourless transparent plastic tear-off strip**

(30) Priority: 08.08.1997 IT BO970502
(71) Applicant: G.D S.p.A., 40133 Bologna (IT)
(72) Inventor: Turra, Mario, 40033 Casalecchio Di Reno, Bologna (IT); Tommasini, Bruno, 40141 Bologna (IT); Neri, Armando, 40139 Bologna (IT)
(74) Representative: Giambrocono, Alfonso, Dr. Ing.

(57) **Abstract**

A device for sensing a tear-off strip (2) of colourless transparent plastic material on a determined portion (3) of a web (4) of wrapping material, the device (1) comprising, on opposite sides of the web (4) and in correspondence with a control station (5), an emitter device (6) for emitting electromagnetic waves of determined wavelength within the infrared range, and a corresponding differential reception device (7) provided with two receivers (10, 11), one (10) of which faces at least part of the determined portion (3), and with a differential amplifier (12) arranged to compare the signals received by the two receivers (10, 11), in order to sense the tear-off strip (2).

## Description

This invention relates to a device for sensing a colourless transparent plastic tear-off strip.

More precisely, the invention relates to a device for sensing the presence of a colourless transparent plastic tear-off strip on a determined portion of a web of wrapping material.

In particular, but not necessarily, the wrapping web is also of colourless transparent plastic material.

The invention finds advantageous application in the packaging of products of various kinds and/or of packets containing the products themselves.

In packaging processes it is known to cover the products and/or packets containing such products with a wrapper formed from a continuous web of colourless transparent plastic material, along a longitudinal portion of which there is normally applied, by thermobonding, a colourless plastic strip, known hereinafter by the term "tear-off strip", which defines a preferential tearing line on the wrapper to facilitate the opening of the wrapper by the consumer.

Generally, the packaging machines used in such processes are provided at a control station with electro-optical sensing devices, normally consisting of common telecameras or optical sensors, which are arranged to verify the presence and/or the correct position of the tear-off strip on the relative web.

For aesthetic reasons it may sometimes be desirable to apply to the web a tear-off strip of colourless transparent plastic material, so that the strip is substantially invisible on the underlying web. In such a case, sensing devices of the aforesaid known type are evidently unreliable or, if the tear-off strip is very thin, they are totally ineffective.

The object of this invention is to provide a sensing device which does not suffer from the aforesaid drawback.

The invention provides a device for sensing a colourless transparent plastic tear-off strip on a determined portion of a web of wrapping material, the device comprising, on opposite sides of said web and in correspondence with a control station, emitter means arranged to emit a determined sensing signal, and corresponding receiver means arranged to receive said determined sensing signal through said web, the device being characterised in that said determined sensing signal consists of electromagnetic waves of determined wavelength within the infrared range.

The aforedefined device is equally effective for coloured tear-off strips and for colourless transparent tear-off strips, as its operation is based on the law according to which the transmittance of the plastic material used for the tear-off strip, normally propylene, varies as a function of the wavelength of the incident electromagnetic waves.

In particular, preferably said wavelength substantially lies between 3.4 and 3.5 microns, in that within such a range the transmittance of propylene is particularly low.

The invention is described hereinafter with reference to the accompanying drawings, which illustrate a non-limiting embodiment thereof, and on which:
Figure 1 is a schematic representation of a preferred embodiment of the device of the invention; and
Figure 2 is a graphic representation of its operation.

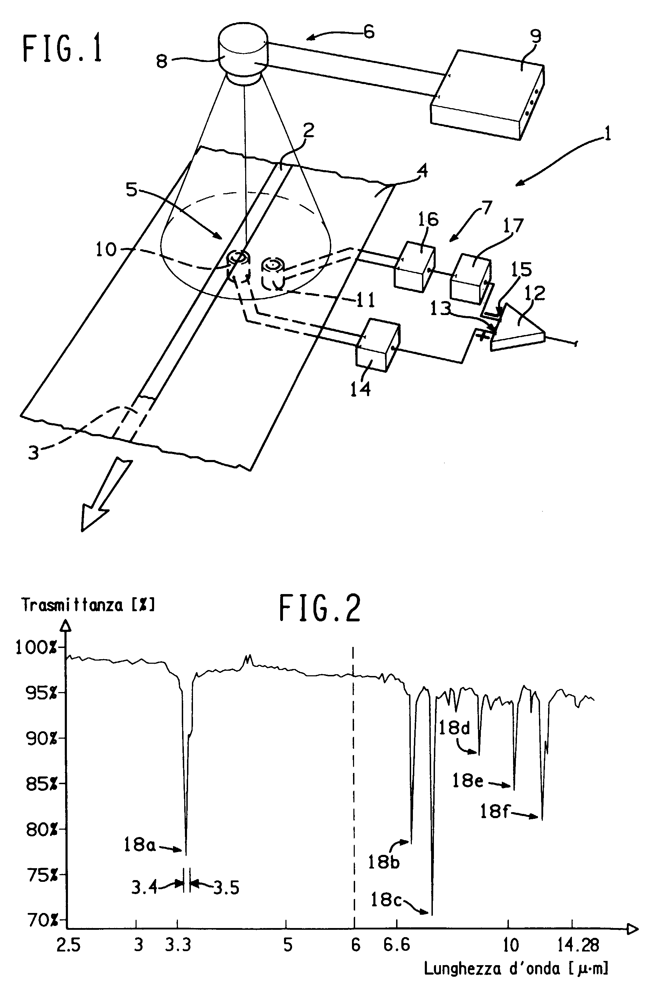

In Figure 1 the reference numeral 1 indicates overall a control device for sensing a colourless transparent polypropylene tear-off strip 2 for verifying its presence and/or correct position on a longitudinal portion 3 of a wrapping web 4, which in the example also consists of colourless transparent polypropylene. In particular, the portion 3 defines on the web 4 a longitudinal band of width equal to the width of the strip 2.

In correspondence with a control station 5, the device 1 comprises an emitter device 6 facing the web 4 and arranged to emit a control signal consisting of electromagnetic waves which, in the example, have a wavelength substantially of between 3.4 and 3.5 microns.

The device 1 also comprises, on the opposite side of the web 4 to the emitter device 6, a differential receiving circuit arranged to receive, through the web 4, the signal emitted by the emitter device 6 to verify the presence and/or the correct position of the strip 2 on the portion 3.

The device 6 comprises an emitter element 8 positioned facing the portion 3, and a power source 9 for the element 8.

The circuit 7 comprises two receivers 10 and 11 positioned on the opposite side of the web 4 to the emitter element 8. Specifically, the receiver 10 is positioned facing that part of the portion 3 in correspondence with the control station 5, to receive through the portion 3 the signal emitted by the emitter element 8, whereas the receiver 11 is positioned to the side of the receiver 10 at a determined distance from this latter, to receive the signal emitted by the emitter element 8 through a portion of the web 4 external to the portion 3.

The differential circuit also comprises a differential amplifier 12, of which one input 13 is connected to the receiver 10 via a relative signal amplifier 14, and another input 15 is connected to the receiver 11 via a relative signal amplifier 16, substantially identical to the amplifier 14, and via an attenuator element 17 interposed between the amplifier 16 and the differential amplifier 12. The differential amplifier 12 is arranged to calculate a difference between the signal received by the input 13 and the signal received by the input 15 to provide as output an acceptance or discard signal for the combined web 4 plus strip 2.

Figure 2 shows in graphic form, limited to a determined infrared range, the law by which the transmittance of the constituent plastic material (preferably of petroleum-derived type, and in particular polypropylene) of the strip 2 varies as a function of the wavelength of the incident electromagnetic waves. Specifically, the graph shows along the horizontal axis the wavelength of the electromagnetic waves expressed in microns, and along the vertical axis the transmittance expressed in percentage terms.

The graph, obtained experimentally, requires no explanation; however the presence of rather marked minima 18a-18f should be noted, at which transmittance is particularly low. In particular, transmittance is particularly low for wavelengths of between 3.4 and 3.5 microns, ie at the minimum 18a, and for further determined wavelengths exceeding 6 microns at the minima 18b-18f.

When in use, the the combined web 4 plus strip 2 is advanced (by known advancement means, not shown) along a path (not shown) extending firstly through a monitoring station (not shown) in which the position of the web 4 relative to said path is monitored (in known manner), and then through the station 5.

At this point, if the strip 2 is correctly superposed on the portion 3 of the web 4, the receivers 10 and 11 receive two respective signals of substantially different intensities. Specifically, for wavelengths of the order of 3.4-3.5 microns the polypropylene used to form the strip 2 has a relatively low transmittance (Figure 2), hence the intensity of the signal received by the receiver 10 is substantially lower than that of the signal received by the receiver 11 In other words, for wavelengths of such an order of magnitude, correct superposing of the strip 2 on the portion 3 results in the signal received by the receiver 10 being substantially different from the signal received by the receiver 11. Consequently, the output of the differential amplifier 12 provides an acceptance signal for the combined web 4 plus strip 2.

In contrast, if the web 4 is without the strip 2, or if the strip 2 is on the web but in a position different from the correct position corresponding to the portion 3, the receivers 10 and 11 receive two respective signals having substantially the same intensity, with the result that the output signal from the differential amplifier is different from the acceptance signal, to reject the combined web 4 plus strip 2.

Finally it should be noted that although the electromagnetic waves emitted by the device 6 have a wavelength of substantially between 3.4 and 3.5 microns in the example, the device 6 could equally emit electromagnetic waves of different wavelength, provided that this is such the transmittance of the plastic material used to form the strip 2 is sufficiently low that the signals received by the receivers 10 and 11 are considerably different when the strip 2 is positioned correctly on the portion 3. In other words, the device 6 can operate in correspondence with the minimum 18, or equivalently in correspondence with any one of the further minima 18b-18f shown in Figure 2.

## Claims

1. A device for sensing a tear-off strip of colourless transparent plastic material on a determined portion (3) of a web (4) of wrapping material, the device (1) comprising, on opposite sides of said web (4) and in correspondence with a control station (5), emitter means (6) arranged to emit a determined sensing signal, and corresponding receiver means (7) arranged to receive said determined sensing signal through said web, the device (1) being characterised in that said determined sensing signal consists of electromagnetic waves of determined wavelength within the infrared range.

2. A device as claimed in claim 1, characterised in that said wavelength is a wavelength for which the transmittance of the constituent colourless transparent plastic material of said strip (2) presents a minimum (18a-18f), in correspondence with which the transmittance is less than a determined value.

3. A device as claimed in claim 2, characterised in that said wavelength is substantially between 3.4 and 3.5 microns.

4. A device as claimed in any one of claims 1 to 3, characterised in that said receiver means (7) define a differential reception circuit (7) comprising at least two receivers (10, 11), of which a first is positioned facing at least part of said determined portion (3), and a second (11) is positioned facing a portion of said web (4) external to said determined portion (3); and a differential amplifier (12) arranged to compare the signals received from said first receiver (10) and from said second receiver (11) respectively, to effect said sensing.

5. A device for sensing a tear-off strip of colourless transparent plastic material on a determined portion of a web of wrapping material, substantially as described with reference to the accompanying figures.
